# EUROPEAN PATENT SPECIFICATION

(11) **EP 4 011 661 B1**
(45) Date of publication and mention of the grant of the patent: **13.03.2024**
(21) Application number: 21212924.1
(22) Date of filing: 07.12.2021
(51) Int. Cl.: B60H 1/00

(54) **AIR CONDITIONING UNIT FOR RECREATIONAL VEHICLE AND CONTROL METHOD THEREOF**
KLIMATISIERUNGSEINHEIT FÜR FREIZEITFAHRZEUG UND STEUERUNGSVERFAHREN DAFÜR
UNITÉ DE CLIMATISATION D'AIR POUR VÉHICULE DE LOISIRS ET SON PROCÉDÉ DE COMMANDE

(30) Priority: 09.12.2020 CN 202011426010
(43) Date of publication of application: 15.06.2022
(73) Proprietor: Guangdong Giwee Technology Co., Ltd., Foshan City Guangdong (CN)
(72) Inventor: ZHOU, Min, Nanhai District Forsham City Guandong (CN); PU, Zhicheng, Nanhai District Forsham City Guandong (CN)
(74) Representative: Dehns

(56) References cited:
- KR-B1- 100 387 627
- US-A- 5 072 105
- US-A1- 2019 315 197

## Description

### Technical Field

The present invention relates to the field of control of air conditioners for recreational vehicles, and in particular to an air conditioning unit for a recreational vehicle and a control method thereof.

### Background

A recreational vehicle is constructed with glass on all of the four sides; and with sunlight, there is a huge temperature difference between a side surface exposed to sunlight and a side surface not exposed to sunlight in the recreational vehicle. Similar to common air conditioners, existing air conditioners for recreational vehicles supply air downward in normal conditions, or supply air at artificially fixed angles. Conventional design does not consider the sunlight-induced temperature difference in a recreational vehicle, thus the temperature in the recreational vehicle cannot be reduced in a timely manner, the area in need of fast cooling cannot be quickly cooled, and the temperature in the recreational vehicle cannot be balanced rapidly, or an opposite effect is caused on the temperature balance in the recreational vehicle, thereby impairing the use.

KR 100387627 B1 discloses an air-conditioning system for a bus comprising temperature sensors, and a method of operating the air conditioning system by adjusting the volume of air provided to each side of the buss based on the difference in temperature between the two sides of the bus.

US 5072105 A discloses an air condition system of a car configured to adjust the angle and volume of air provided to a driver and passenger based on the output of sunlight sensors located on a hub on the dashboard.

### Summary of the Invention

With respect to the problems in the prior art, the present invention provides an air conditioning unit for a recreational vehicle according to claim 6 and a control method thereof according to claim 1. According to the present invention, the refrigeration air outlet direction of the air conditioner for the recreational vehicle is controlled according to the sunlight direction of the recreational vehicle in parking (i.e. parked recreational vehicle), so as to quickly balance the temperature in the recreational vehicle.

In a first aspect according to claim 1, the present invention provides a control method of an air conditioning unit of a recreational vehicle, comprising the following steps:
S1. detecting the operation status of an air conditioner;
S2. acquiring, by photosensitive sensors, the sunlight conditions of the recreational vehicle in parking; and
S3. adjusting, by a control module, air outlet areas of the air conditioning unit of the recreational vehicle according to the acquired sunlight conditions and the sunlight exposure side of the recreational vehicle in parking;
wherein the air outlet coverage of the air conditioning unit of the recreational vehicle is divided into a plurality of air outlet areas, and wherein a photosensitive sensor is located in each air outlet area; and wherein the step S3 comprises: controlling, by the control module, the air conditioning unit of the recreational vehicle to refrigerate an air outlet area when a resistance value of a photosensitive sensor located in that air outlet area is the smallest, which indicates that the sunlight exposure side of the recreational vehicle is on the area in which that photosensitive sensor is located.

Optionally, the photosensitive sensors are divided into a first photosensitive sensor, a second photosensitive sensor and a third photosensitive sensor.

Optionally, the air outlet coverage of the air conditioning unit for the recreational vehicle is divided into a first air outlet area, a second air outlet area and a third air outlet area.

Optionally, the step S1 comprises: refrigerating the second air outlet area first by the air conditioning unit for the recreational vehicle when the air conditioning unit for the recreational vehicle detects that the air conditioner is in refrigeration.

Optionally, the first photosensitive sensor is located in the first air outlet area, the second photosensitive sensor is located in the second air outlet area, and the third photosensitive sensor is located in the third air outlet area, wherein the step S3 comprises:
controlling, by the control module, the air conditioning unit for the recreational vehicle to refrigerate the first air outlet area when the resistance value of the first photosensitive sensor is the smallest, which indicates that the sunlight exposure side of the recreational vehicle is on the first photosensitive sensor;
controlling, by the control module, the air conditioning unit for the recreational vehicle to refrigerate the second air outlet area when the resistance value of the second photosensitive sensor is the smallest, which indicates that the sunlight exposure side of the recreational vehicle is on the second photosensitive sensor; and
controlling, by the control module, the air conditioning unit for the recreational vehicle to refrigerate the third air outlet area when the resistance value of the third photosensitive sensor is the smallest, which indicates that the sunlight exposure side of the recreational vehicle is on the third photosensitive sensor.

In a second aspect according to claim 6, the present invention provides an air conditioning unit for a recreational vehicle, comprising:
a detection module, configured to detect the operation status of an air conditioner for a recreational vehicle;
photosensitive sensors, configured to acquire the sunlight conditions of the recreational vehicle in parking; and
a control module, configured to adjust air outlet areas of the air conditioning unit of the recreational vehicle according to the sunlight exposure side and the sunlight conditions of the recreational vehicle acquired by the photosensitive sensors;
wherein the air outlet coverage of the air conditioning unit of the recreational vehicle is divided into a plurality of air outlet areas, and wherein a photosensitive sensor is located in each air outlet area; and wherein the control module controls the air conditioning unit of the recreational vehicle to refrigerate an air outlet area when the resistance value of a photosensitive sensor located in that air outlet area is the smallest, which indicates that the sunlight exposure side of the recreational vehicle is on the area in which that photosensitive sensor is located.

Optionally, the control module is connected to the photosensitive sensors and the detection module.

Optionally, the photosensitive sensors are divided into a first photosensitive sensor, a second photosensitive sensor and a third photosensitive sensor.

Optionally, the air outlet coverage of the air conditioning unit for the recreational vehicle is divided into a first air outlet area, a second air outlet area and a third air outlet area.

Optionally, the first photosensitive sensor is located in the first air outlet area, the second photosensitive sensor is located in the second air outlet area, and the third photosensitive sensor is located in the third air outlet area, wherein
the control module controls the air conditioning unit for the recreational vehicle to refrigerate the first air outlet area when the resistance value of the first photosensitive sensor is the smallest, which indicates that the sunlight exposure side of the recreational vehicle is on the first photosensitive sensor;
the control module controls the air conditioning unit for the recreational vehicle to refrigerate the second air outlet area when the resistance value of the second photosensitive sensor is the smallest, which indicates that the sunlight exposure side of the recreational vehicle is on the second photosensitive sensor; and
the control module controls the air conditioning unit for the recreational vehicle to refrigerate the third air outlet area when the resistance value of the third photosensitive sensor is the smallest, which indicates that the sunlight exposure side of the recreational vehicle is on the third photosensitive sensor.

It can be seen from the above technical solution that, in the control method of an air conditioning unit for a recreational vehicle according to the present invention, the air conditioning unit for the recreational vehicle first detects the operation status of the air conditioner, then acquires the sunlight conditions of the recreational vehicle in parking by the photosensitive sensors, and finally adjusts the air outlet areas of the air conditioning unit for the recreational vehicle according to the acquired sunlight conditions and the sunlight exposure side of the recreational vehicle in parking by using the control module. Thus, the refrigeration air outlet direction of the air conditioner for the recreational vehicle is controlled according to the sunlight direction of the recreational vehicle in parking, so as to quickly balance the temperature in the recreational vehicle.

### Brief Description of the Drawings

A brief introduction of the drawings used for the description of the embodiments is made below.The drawings described below illustrate some embodiments of the present invention.
FIG. 1 is a flow chart of a control method of an air conditioning unit for a recreational vehicle;
FIG. 2 is a schematic diagram illustrating air outlet areas in the control method of an air conditioning unit for a recreational vehicle;
FIG. 3 is a schematic diagram illustrating a structure of the air conditioning unit for the recreational vehicle;
FIG. 4 is a schematic diagram illustrating the connection of the photosensitive sensors of the air conditioning unit for the recreational vehicle.

### Detailed Description

To make clearer the objectives, technical solutions and advantages of the embodiments of the present invention, a clear and complete description of embodiments of the present invention is made below in combination with the drawings therein. Some, but not all of the embodiments of the present invention will be described. All other embodiments, obtained by those of ordinary skill in the art based on the embodiments of the present invention, are within the scope of the present invention as defined by the appended claims.

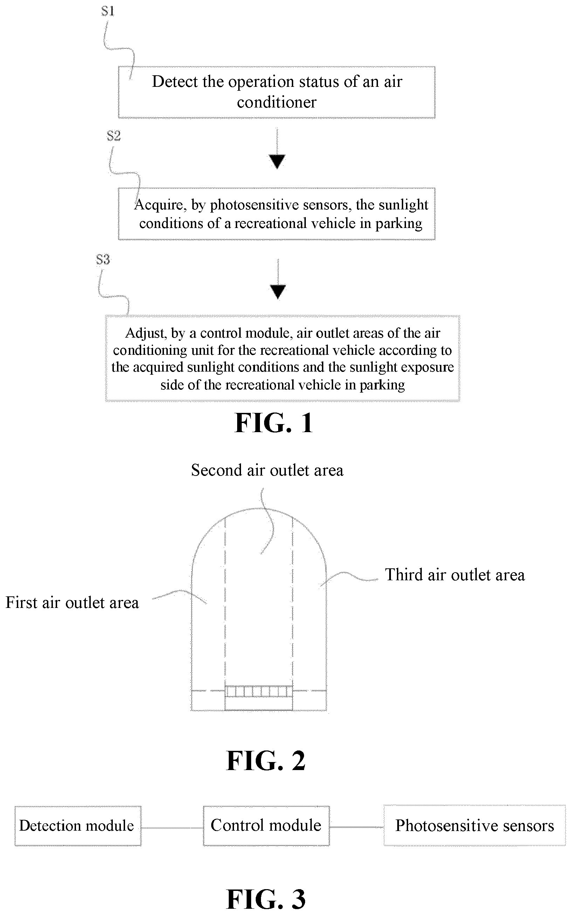

FIG. 1 is a flow chart of the control method of an air conditioning unit for a recreational vehicle. As shown in FIG. 1, the control method of an air conditioning unit for a recreational vehicle includes the following steps:
S1. An operation status of the air conditioner is detected,
that is to say, the air conditioning unit for the recreational vehicle may be started or stopped by detecting the operation status of the air conditioner.

For example, when the air conditioning unit for the recreational vehicle detects that the air conditioner is operated in a refrigeration status, the air conditioning unit for the recreational vehicle may be started to enter step S2; and when the air conditioning unit for the recreational vehicle detects that the air conditioner is operated in a heating status, the air conditioning unit for the recreational vehicle may not enter step S2.

S2. Photosensitive sensors acquire sunlight conditions of the recreational vehicle in parking,
that is to say, when the air conditioner is started, after detecting that the air conditioner is in a refrigeration status, the air conditioning unit for the recreational vehicle may start to acquire the sunlight conditions of the recreational vehicle in parking through three photosensitive sensors disposed on the roof of the recreational vehicle.

S3. A control module adjusts air outlet areas of the air conditioning unit for the recreational vehicle according to the acquired sunlight conditions and the sunlight exposure side of the recreational vehicle in parking.

Specifically, the air conditioning unit for the recreational vehicle may be started after a refrigeration status is detected. In the operation process of the air conditioning unit for the recreational vehicle, the photosensitive sensors may start to acquire the sunlight conditions of the recreational vehicle in parking, and the control module may adjust the air outlet areas of the air conditioner according to the acquired sunlight conditions and the sunlight exposure side, and may preset a time interval, where the preset time interval may for example be 1 min.

The photosensitive sensors are divided into a first photosensitive sensor, a second photosensitive sensor and a third photosensitive sensor.

FIG. 2 is a schematic diagram illustrating the air outlet areas in the control method of an air conditioning unit for a recreational vehicle. As shown in FIG. 2, the air outlet coverage of the air conditioning unit for the recreational vehicle is divided into a first air outlet area, a second air outlet area and a third air outlet area.

Specifically, the first photosensitive sensor may be located above the vehicle roof in the first air outlet area, the second photosensitive sensor may be located above the vehicle roof in the second air outlet area, and the third photosensitive sensor may be located above the vehicle roof in the third air outlet area.

The step S1 may include: refrigerating, by the air conditioning unit for the recreational vehicle, the second air outlet area first when the air conditioning unit for the recreational vehicle detects that the air conditioner is in refrigeration.

Specifically, the air conditioning unit for the recreational vehicle may refrigerate the second air outlet area first when the air conditioning unit for the recreational vehicle is started and detects that the air conditioner is operated in a refrigeration status.

According to one embodiment of the present invention, the first photosensitive sensor is located in the first air outlet area, the second photosensitive sensor is located in the second air outlet area, and the third photosensitive sensor is located in the third air outlet area, where the step S3 includes:
controlling, by the control module, the air conditioning unit for the recreational vehicle to refrigerate the first air outlet area when the resistance value of the first photosensitive sensor is the smallest, which indicates that the sunlight exposure side of the recreational vehicle is on the first photosensitive sensor;
controlling, by the control module, the air conditioning unit for the recreational vehicle to refrigerate the second air outlet area when the resistance value of the second photosensitive sensor is the smallest, which indicates that the sunlight exposure side of the recreational vehicle is on the second photosensitive sensor; and
controlling, by the control module, the air conditioning unit for the recreational vehicle to refrigerate the third air outlet area when the resistance value of the third photosensitive sensor is the smallest, which indicates that the sunlight exposure side of the recreational vehicle is on the third photosensitive sensor.

Specifically, in the operation process of the air conditioning unit for the recreational vehicle, the control module will judge which side of the recreational vehicle is a sunlight exposure side according to the resistance values acquired by the photosensitive sensors, so as to adjust the air outlet areas of the air conditioning unit for the recreational vehicle.

For example, when R1>R2>R3 (where R1 is the resistance value of the first photosensitive sensor, R2 is the resistance value of the second photosensitive sensor and R3 is the resistance value of the third photosensitive sensor), air outlet refrigeration is performed on the side with the third air outlet area where the third photosensitive sensor is located; when R1>R2=R3, refrigeration is maintained in the current air outlet area; when R2<R1=R3, air outlet refrigeration is performed in the second air outlet area where the second photosensitive sensor is located; when R1<R2<R3, air outlet refrigeration is performed on the side with the first air outlet area where the first photosensitive sensor is located; and when R1=R2<R3, the current air outlet switching position is kept unchanged.

In conclusion, in the control method of an air conditioning unit for a recreational vehicle according to the embodiment of the present invention, the air conditioning unit for the recreational vehicle first detects that the air conditioner is in a refrigeration state, then acquires the sunlight conditions of the recreational vehicle in parking by the photosensitive sensors, and finally adjusts the air outlet areas of the air conditioning unit for the recreational vehicle according to the acquired sunlight conditions and the sunlight exposure side of the recreational vehicle in parking by using the control module. Thus, in at least preferred embodiments of the present invention, the refrigeration air outlet direction of the air conditioner for the recreational vehicle may be controlled according to the sunlight direction of the recreational vehicle in parking, so as to achieve purposes of quickly balancing the temperature in the recreational vehicle and quickly reducing the temperature, thereby improving the comfort of the recreational vehicle users.

FIG. 3 is a schematic diagram illustrating the structure of the air conditioning unit for the recreational vehicle according to an embodiment of the present invention. As shown in FIG. 3, the air conditioning unit for the recreational vehicle includes a detection module, photosensitive sensors and a control module.

The detection module may be configured to detect the working status of an air conditioner (i.e. the air conditioning unit may comprise the air conditioner); the photosensitive sensors may be configured to acquire the sunlight conditions of the recreational vehicle; and the control module may be configured to adjust the air outlet areas of the air conditioning unit for the recreational vehicle according to the working status of the air conditioning unit and the sunlight conditions acquired by the photosensitive sensors.

The control module may be connected to the photosensitive sensors and the detection module.

Specifically, the air conditioning unit for the recreational vehicle may be started after a refrigeration status is detected. In the operation process of the air conditioning unit for the recreational vehicle, the photosensitive sensors may start to acquire the sunlight conditions of the recreational vehicle in parking, and the control module may adjust the air outlet areas of the air conditioner according to the acquired sunlight conditions and the sunlight exposure side, and may preset a time interval, where the preset time interval may for example be 1 min.

The photosensitive sensors may be divided into a first photosensitive sensor, a second photosensitive sensor and a third photosensitive sensor; and the air outlet coverage of the air conditioning unit for the recreational vehicle may be divided into a first air outlet area, a second air outlet area and a third air outlet area.

The air conditioning unit for the recreational vehicle may refrigerate the second air outlet area first when the air conditioning unit for the recreational vehicle detects that the air conditioner is in refrigeration.

According to one embodiment of the present invention, the first photosensitive sensor is located in the first air outlet area, the second photosensitive sensor is located in the second air outlet area, and the third photosensitive sensor is located in the third air outlet area, where the step S3 includes:
controlling, by the control module, the air conditioning unit for the recreational vehicle to refrigerate the first air outlet area when the resistance value of the first photosensitive sensor is the smallest, which indicates that the sunlight exposure side of the recreational vehicle is on the first photosensitive sensor;
controlling, by the control module, the air conditioning unit for the recreational vehicle to refrigerate the second air outlet area when the resistance value of the second photosensitive sensor is the smallest, which indicates that the sunlight exposure side of the recreational vehicle is on the second photosensitive sensor; and
controlling, by the control module, the air conditioning unit for the recreational vehicle to refrigerate the third air outlet area when the resistance value of the third photosensitive sensor is the smallest, which indicates that the sunlight exposure side of the recreational vehicle is on the third photosensitive sensor.

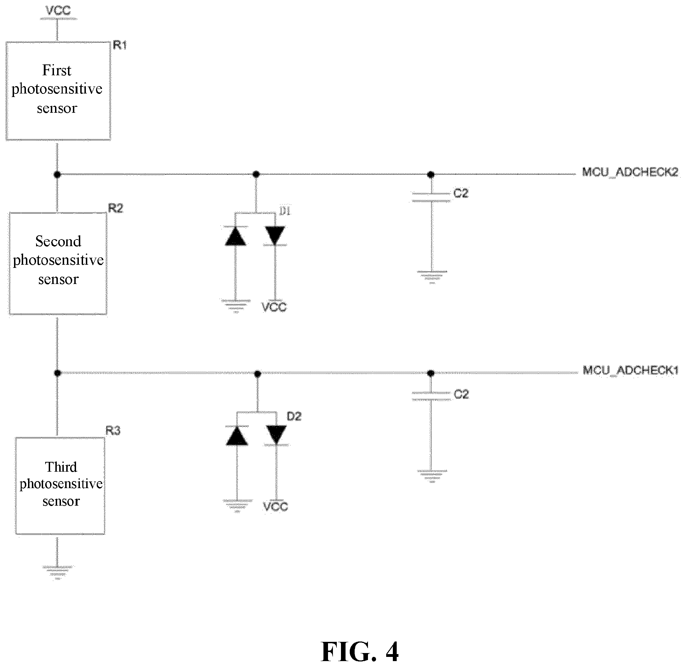

In brief, as shown in FIG. 4, the resistors of the three photosensitive sensors may be connected in series, with the head and the tail connected to the power supply; through single-chip voltage detection ports AD_CHECK1 and AD_CHECK2:
when VCC-AD_CHECK2>AD_CHECK2-AD_CHECK1>AD_CHECK1, R3 has the smallest resistance, the third photosensitive sensor R3 has the strongest intensity of illumination, and the air outlet is switched toward the third air outlet area where R3 is located for air outlet refrigeration;
when VCC-AD_CHECK2>AD_CHECK1>AD_CHECK2-AD_CHECK1, R2 has the smallest resistance, the second photosensitive sensor R2 has the strongest intensity of illumination, and the air outlet is switched toward the second air outlet area where R2 is located for air outlet refrigeration;
when VCC-AD_CHECK2<AD_CHECK2-AD_CHECK1<AD_CHECK1, R1 has the smallest resistance, the first photosensitive sensor R1 has the strongest intensity of illumination, and the air outlet is switched toward the first air outlet area where R1 is located for air outlet refrigeration.
In the case that the photoresistors are located on the vehicle roof and the circuit board is located in the vehicle, a relatively long circuit is needed for leading the sensors to the vehicle roof, and D1 and D2 are used for voltage clamping to protect the chip while C2 are used for filtering to stabilize the voltage and prevent interference. Air outlet switch guiding is may be controlled by a common stepping motor; the angular position may be determined by limiting; and the actual position may be worked out with actual operation steps, so as to determine the air outlet switch guiding angle.

In summary, in an embodiment of the present invention, a user may detect the operation status of the air conditioner through an acquisition module; when the air conditioner is operated in a refrigeration mode, the photosensitive sensors may acquire the sunlight conditions of the recreational vehicle in parking; and the control module may adjust and control the air outlet areas according to the sunlight conditions acquired by the photosensitive sensors.

To sum up, the control module of the air conditioning unit provided according to the present invention adjusts the air outlet areas of the air conditioning unit according to the operation status of the air conditioner detected by the acquisition module and the sunlight conditions acquired by the photosensitive sensors in a refrigeration mode. Thus, by controlling the air outlet areas, the device may reduce the temperature of the recreational vehicle in a timely manner and quickly cool the area in need of fast cooling, and also may achieve an effect of quickly balancing the temperature in the recreational vehicle, thereby improving the user's sense of comfort, and effectively avoiding the need for manual adjustment of the air direction of the air conditioning unit by the user using a remote control; and meanwhile, the energy consumption of the air conditioning unit may be lowered to save energy sources.

In the descriptions of this Specification, the descriptions of reference terminologies such as "one embodiment", "some embodiments", "example", "specific example" or "some examples" mean that specific features, structures, materials or characteristics described by the embodiment or example are included in at least one embodiment or example of the present invention. In this Specification, use of the above terminologies are not necessarily targeted at the same embodiment or example. Moreover, the specific features, structures, materials or characteristics described can be integrated in an appropriate manner in any one or more embodiments or examples. In addition, without mutual contradiction, those skilled in the art can integrate and combine different embodiments or examples as well as the features of different embodiments or examples described in this Specification.

In addition, the terminologies "first" and "second" are only used for the purpose of description, and cannot be interpreted as indicating or implying the relative importance or implicitly specifying the quantity of the indicated technical features. Therefore, the features defined with "first" and "second" may explicitly or implicitly include at least one of such features. In the description of the present invention, unless otherwise specifically defined, "a plurality of" means at least two, for example, two, three, etc.

Although the embodiments of the present invention have been displayed and described, those of ordinary skill in the art can understand that many changes, modifications, substitutions and variations can be made to these embodiments without departing from the present invention as defined by the attached claims.

## Claims

1. A control method of an air conditioning unit of a recreational vehicle, comprising the following steps:
S1. detecting an operation status of an air conditioner;
S2. acquiring, by photosensitive sensors (R1, R2, R3), sunlight conditions of the recreational vehicle in parking; and
S3. adjusting, by a control module, air outlet areas of the air conditioning unit of the recreational vehicle according to the acquired sunlight conditions and a sunlight exposure side of the recreational vehicle in parking;
**characterized in that**
the air outlet coverage of the air conditioning unit of the recreational vehicle is divided into a plurality of air outlet areas, and a photosensitive sensor is located in each air outlet area; and
the step S3 comprises
controlling, by the control module, the air conditioning unit of the recreational vehicle to refrigerate an air outlet area when a resistance value of a photosensitive sensor located **in that** air outlet area is the smallest, which indicates that the sunlight exposure side of the recreational vehicle is on the area in which that photosensitive sensor is located.

2. The control method of an air conditioning unit of a recreational vehicle according to claim 1, wherein the photosensitive sensors comprise a first photosensitive sensor (R1), a second photosensitive sensor (R2) and a third photosensitive sensor (R3).

3. The control method of an air conditioning unit of a recreational vehicle according to claim 1 or 2, wherein the plurality of air outlet areas comprises a first air outlet area, a second air outlet area and a third air outlet area.

4. The control method of an air conditioning unit of a recreational vehicle according to claim 3, wherein the step S 1 comprises: refrigerating the second air outlet area first by the air conditioning unit for the recreational vehicle when the air conditioning unit for the recreational vehicle detects that the air conditioner is in refrigeration.

5. The control method of an air conditioning unit of a recreational vehicle according to claims 3 or 4, wherein a first photosensitive sensor (R1) is located in the first air outlet area, a second photosensitive sensor (R2) is located in the second air outlet area, and a third photosensitive sensor (R3) is located in the third air outlet area, and
wherein the step S3 comprises:
controlling, by the control module, the air conditioning unit for the recreational vehicle to refrigerate the first air outlet area when the resistance value of the first photosensitive sensor is the smallest, which indicates that the sunlight exposure side of the recreational vehicle is on the first photosensitive sensor;
controlling, by the control module, the air conditioning unit for the recreational vehicle to refrigerate the second air outlet area when the resistance value of the second photosensitive sensor is the smallest, which indicates that the sunlight exposure side of the recreational vehicle is on the second photosensitive sensor; and
controlling, by the control module, the air conditioning unit for the recreational vehicle to refrigerate the third air outlet area when the resistance value of the third photosensitive sensor is the smallest, which indicates that the sunlight exposure side of the recreational vehicle is on the third photosensitive sensor.

6. An air conditioning unit for a recreational vehicle, comprising:
a detection module, configured to detect an operation status of an air conditioner for a recreational vehicle;
photosensitive sensors (R1, R2, R3), configured to acquire sunlight conditions of the recreational vehicle in parking; and
a control module, configured to adjust air outlet areas of the air conditioning unit of the recreational vehicle according to a sunlight exposure side and the sunlight conditions of the recreational vehicle acquired by the photosensitive sensors;
charaterized in that
the air outlet coverage of the air conditioning unit of the recreational vehicle is divided into a plurality of air outlet areas, and a photosensitive sensor is located in each air outlet area; and
the control module controls the air conditioning unit for the recreational vehicle to refrigerate an air outlet area when a resistance value of a photosensitive sensor located in that air outlet area is the smallest, which indicates that the sunlight exposure side of the recreational vehicle is on the area in which that photosensitive sensor is located.

7. The air conditioning unit for a recreational vehicle according to claim 6, wherein the control module is connected to the photosensitive sensors (R1, R2, R3) and the detection module.

8. The air conditioning unit for a recreational vehicle according to claim 6 or 7, wherein the photosensitive sensors (R1, R2, R3) comprise a first photosensitive sensor (R1), a second photosensitive sensor (R2) and a third photosensitive sensor (R3).

9. The air conditioning unit for a recreational vehicle according to claim 6, 7 or 8, wherein the plurality of air outlet areas comprises a first air outlet area, a second air outlet area and a third air outlet area.

10. The air conditioning unit for a recreational vehicle according to claim 9 when dependent on claim 8, wherein the first photosensitive sensor (R1) is located in the first air outlet area, the second photosensitive sensor (R2) is located in the second air outlet area, and the third photosensitive sensor (R3) is located in the third air outlet area, and wherein
the control module controls the air conditioning unit for the recreational vehicle to refrigerate the first air outlet area when the resistance value of the first photosensitive sensor is the smallest, which indicates that the sunlight exposure side of the recreational vehicle is on the first photosensitive sensor;
the control module controls the air conditioning unit for the recreational vehicle to refrigerate the second air outlet area when the resistance value of the second photosensitive sensor is the smallest, which indicates that the sunlight exposure side of the recreational vehicle is on the second photosensitive sensor; and
the control module controls the air conditioning unit for the recreational vehicle to refrigerate the third air outlet area when the resistance value of the third photosensitive sensor is the smallest, which indicates that the sunlight exposure side of the recreational vehicle is on the third photosensitive sensor.

## Patentansprüche

1. Steuerungsverfahren einer Klimatisierungseinheit eines Freizeitfahrzeugs, umfassend die folgenden Schritte:
S1. Erfassen eines Betriebszustands einer Klimaanlage;
S2. Erfassen von Sonnenlichtbedingungen des geparkten Freizeitfahrzeugs durch lichtempfindliche Sensoren (R1, R2, R3); und
S3. Einstellen von Luftauslassflächen der Klimatisierungseinheit des Freizeitfahrzeugs gemäß den erfassten Sonnenlichtbedingungen und einer Sonnenlichtexpositionsseite des geparkten Freizeitfahrzeugs durch ein Steuerungsmodul;
**dadurch gekennzeichnet, dass**,
die Luftauslassabdeckung der Klimatisierungseinheit des Freizeitfahrzeugs in eine Vielzahl von Luftauslassflächen unterteilt ist, und ein lichtempfindlicher Sensor in jeder Luftauslassfläche angeordnet ist; und
der Schritt S3 Folgendes umfasst:
Steuern der Klimatisierungseinheit des Freizeitfahrzeugs durch das Steuerungsmodul, um eine Luftauslassfläche zu kühlen, wenn ein Widerstandswert eines lichtempfindlichen Sensors, der in dieser Luftauslassfläche angeordnet ist, am kleinsten ist, was anzeigt, dass sich die Sonnenlichtexpositionsseite des Freizeitfahrzeugs auf der Fläche befindet, in der dieser lichtempfindliche Sensor angeordnet ist.

2. Steuerungsverfahren einer Klimatisierungseinheit eines Freizeitfahrzeugs nach Anspruch 1, wobei die lichtempfindlichen Sensoren einen ersten lichtempfindlichen Sensor (R1), einen zweiten lichtempfindlichen Sensor (R2) und einen dritten lichtempfindlichen Sensor (R3) umfassen.

3. Steuerungsverfahren einer Klimatisierungseinheit eines Freizeitfahrzeugs nach Anspruch 1 oder 2, wobei die Vielzahl der Luftauslassflächen eine erste Luftauslassfläche, eine zweite Luftauslassfläche und eine dritte Luftauslassfläche umfasst.

4. Steuerungsverfahren einer Klimatisierungseinheit eines Freizeitfahrzeugs nach Anspruch 3, wobei der Schritt S1 Folgendes umfasst: Kühlen der zweiten Luftauslassfläche zuerst durch die Klimatisierungseinheit für das Freizeitfahrzeug, wenn die Klimatisierungseinheit für das Freizeitfahrzeug erkennt, dass sich die Klimaanlage im Kühlbetrieb befindet.

5. Steuerungsverfahren einer Klimatisierungseinheit eines Freizeitfahrzeugs nach Anspruch 3 oder 4, wobei ein erster lichtempfindlicher Sensor (R1) in der ersten Luftauslassfläche angeordnet ist, ein zweiter lichtempfindlicher Sensor (R2) in der zweiten Luftauslassfläche angeordnet ist und ein dritter lichtempfindlicher Sensor (R3) in der dritten Luftauslassfläche angeordnet ist, und
wobei der Schritt S3 Folgendes umfasst:
Steuern der Klimatisierungseinheit für das Freizeitfahrzeug durch das Steuerungsmodul, um die erste Luftauslassfläche zu kühlen, wenn der Widerstandswert des ersten lichtempfindlichen Sensors am kleinsten ist, was anzeigt, dass sich die Sonnenlichtexpositionsseite des Freizeitfahrzeugs auf dem ersten lichtempfindlichen Sensor befindet;
Steuern der Klimatisierungseinheit für das Freizeitfahrzeug durch das Steuerungsmodul, um die zweite Luftauslassfläche zu kühlen, wenn der Widerstandswert des zweiten lichtempfindlichen Sensors am kleinsten ist, was anzeigt, dass sich die Sonnenlichtexpositionsseite des Freizeitfahrzeugs auf dem zweiten lichtempfindlichen Sensor befindet; und
Steuern der Klimatisierungseinheit des Freizeitfahrzeugs durch das Steuerungsmodul, um die dritte Luftauslassfläche zu kühlen, wenn ein Widerstandswert des dritten lichtempfindlichen Sensors, der in dieser Luftauslassfläche angeordnet ist, am kleinsten ist, was anzeigt, dass sich die Sonnenlichtexpositionsseite des Freizeitfahrzeugs auf dem dritten lichtempfindlichen Sensor befindet.

6. Klimatisierungseinheit für ein Freizeitfahrzeug, umfassend:
ein Erfassungsmodul, das dazu konfiguriert ist, einen Betriebszustand einer Klimaanlage für ein Freizeitfahrzeug zu erfassen;
lichtempfindliche Sensoren (R1, R2, R3), die dazu konfiguriert sind, Sonnenlichtbedingungen des geparkten Freizeitfahrzeugs zu erfassen; und
ein Steuerungsmodul, das dazu konfiguriert ist, Luftauslassflächen der Klimatisierungseinheit des Freizeitfahrzeugs gemäß einer Sonnenlichtexpositionsseite und den von den lichtempfindlichen Sensoren erfassten Sonnenlichtbedingungen des Freizeitfahrzeugs einzustellen;
**dadurch gekennzeichnet, dass**
die Luftauslassabdeckung der Klimatisierungseinheit des Freizeitfahrzeugs in eine Vielzahl von Luftauslassflächen unterteilt ist, und ein lichtempfindlicher Sensor in jeder Luftauslassfläche angeordnet ist; und
das Steuerungsmodul die Klimatisierungseinheit für das Freizeitfahrzeug steuert, um eine Luftauslassfläche zu kühlen, wenn ein Widerstandswert eines lichtempfindlichen Sensors, der in dieser Luftauslassfläche angeordnet ist, am kleinsten ist, was anzeigt, dass die Sonnenlichtexpositionsseite des Freizeitfahrzeugs auf der Fläche liegt, in der dieser lichtempfindliche Sensor angeordnet ist.

7. Klimatisierungseinheit für ein Freizeitfahrzeug nach Anspruch 6, wobei das Steuerungsmodul mit den lichtempfindlichen Sensoren (R1, R2, R3) und dem Erkennungsmodul verbunden ist.

8. Klimatisierungseinheit für ein Freizeitfahrzeug nach Anspruch 6 oder 7, wobei die lichtempfindlichen Sensoren (R1, R2, R3) einen ersten lichtempfindlichen Sensor (R1), einen zweiten lichtempfindlichen Sensor (R2) und einen dritten lichtempfindlichen Sensor (R3) umfassen.

9. Klimatisierungseinheit für ein Freizeitfahrzeug nach Anspruch 6, 7 oder 8, wobei die Vielzahl der Luftauslassflächen eine erste Luftauslassfläche, eine zweite Luftauslassfläche und eine dritte Luftauslassfläche umfasst.

10. Klimatisierungseinheit für ein Freizeitfahrzeug nach Anspruch 9 in Abhängigkeit von Anspruch 8, wobei der erste lichtempfindliche Sensor (R1) in der ersten Luftauslassfläche angeordnet ist, der zweite lichtempfindliche Sensor (R2) in der zweiten Luftauslassfläche angeordnet ist und der dritte lichtempfindliche Sensor (R3) in der dritten Luftauslassfläche angeordnet ist, und wobei
das Steuerungsmodul die Klimatisierungseinheit für das Freizeitfahrzeug steuert, um die erste Luftauslassfläche zu kühlen, wenn der Widerstandswert des ersten lichtempfindlichen Sensors am kleinsten ist, was anzeigt, dass sich die Sonnenlichtexpositionsseite des Freizeitfahrzeugs auf dem ersten lichtempfindlichen Sensor befindet;
das Steuerungsmodul die Klimatisierungseinheit für das Freizeitfahrzeug steuert, um die zweite Luftauslassfläche zu kühlen, wenn der Widerstandswert des zweiten lichtempfindlichen Sensors am kleinsten ist, was anzeigt, dass sich die Sonnenlichtexpositionsseite des Freizeitfahrzeugs auf dem zweiten lichtempfindlichen Sensor befindet; und
das Steuerungsmodul die Klimatisierungseinheit für das Freizeitfahrzeug steuert, um die dritte Luftauslassfläche zu kühlen, wenn ein Widerstandswert des dritten lichtempfindlichen Sensors, der in dieser Luftauslassfläche angeordnet ist, am kleinsten ist, was anzeigt, dass sich die Sonnenlichtexpositionsseite des Freizeitfahrzeugs auf dem dritten lichtempfindlichen Sensor befindet.

## Revendications

1. Procédé de commande d'une unité de climatisation d'air d'un véhicule de loisirs, comprenant les étapes suivantes :
S1. la détection d'un état de fonctionnement d'un climatiseur d'air ;
S2. l'acquisition, par des capteurs photosensibles (R1, R2, R3), de conditions de lumière du soleil du véhicule de loisirs en stationnement ; et
S3. le réglage, par un module de commande, de zones de sortie d'air de l'unité de climatisation d'air du véhicule de loisirs en fonction des conditions de lumière du soleil acquises et d'un côté d'exposition à la lumière du soleil du véhicule de loisirs en stationnement ;
**caractérisé en ce que**
la couverture de sortie d'air de l'unité de climatisation d'air du véhicule de loisirs est divisée en une pluralité de zones de sortie d'air, et un capteur photosensible est situé dans chaque zone de sortie d'air ; et
l'étape S3 comprend :
la commande, par le module de commande, de l'unité de climatisation d'air du véhicule de loisirs pour réfrigérer une zone de sortie d'air lorsqu'une valeur de résistance d'un capteur photosensible situé dans cette zone de sortie d'air est la plus petite, ce qui indique que le côté d'exposition à la lumière du soleil du véhicule de loisirs est sur la zone dans laquelle ce capteur photosensible est situé.

2. Procédé de commande d'une unité de climatisation d'air d'un véhicule de loisirs selon la revendication 1, dans lequel les capteurs photosensibles comprennent un premier capteur photosensible (R1), un deuxième capteur photosensible (R2) et un troisième capteur photosensible (R3).

3. Procédé de commande d'une unité de climatisation d'air d'un véhicule de loisirs selon la revendication 1 ou 2, dans lequel la pluralité de zones de sortie d'air comprend une première zone de sortie d'air, une deuxième zone de sortie d'air et une troisième zone de sortie d'air.

4. Procédé de commande d'une unité de climatisation d'air d'un véhicule de loisirs selon la revendication 3, dans lequel l'étape S1 comprend : la réfrigération de la deuxième zone de sortie d'air d'abord par l'unité de climatisation d'air du véhicule de loisirs lorsque l'unité de climatisation d'air du véhicule de loisirs détecte que le climatiseur d'air est en réfrigération.

5. Procédé de commande d'une unité de climatisation d'air d'un véhicule de loisirs selon les revendications 3 ou 4, dans lequel un premier capteur photosensible (R1) est situé dans la première zone de sortie d'air, un deuxième capteur photosensible (R2) est situé dans la deuxième zone de sortie d'air et un troisième capteur photosensible (R3) est situé dans la troisième zone de sortie d'air, et
dans lequel l'étape S3 comprend :
la commande, par le module de commande, de l'unité de climatisation d'air pour le véhicule de loisirs pour réfrigérer la première zone de sortie d'air lorsque la valeur de résistance du premier capteur photosensible est la plus petite, ce qui indique que le côté d'exposition à la lumière soleil du véhicule de loisirs est sur le premier capteur photosensible ;
la commande, par le module de commande, de l'unité de climatisation d'air pour le véhicule de loisirs pour réfrigérer la deuxième zone de sortie d'air lorsqu'une valeur de résistance du deuxième capteur photosensible est la plus petite, ce qui indique que le côté d'exposition à la lumière du soleil du véhicule de loisirs est sur le deuxième capteur photosensible ; et
la commande, par le module de commande, de l'unité de climatisation d'air pour le véhicule de loisirs pour réfrigérer la troisième zone de sortie d'air lorsque la valeur de résistance du troisième capteur photosensible est la plus petite, ce qui indique que le côté d'exposition à la lumière du soleil du véhicule de loisirs est sur le troisième capteur photosensible.

6. Unité de climatisation d'air pour un véhicule de loisirs, comprenant :
un module de détection, configuré pour détecter un état de fonctionnement d'un climatiseur d'air pour un véhicule de loisirs ;
des capteurs photosensibles (R1, R2, R3), configurés pour acquérir des conditions de lumière du soleil du véhicule de loisirs en stationnement ; et
un module de commande, configuré pour régler des zones de sortie d'air de l'unité de climatisation d'air du véhicule de loisirs en fonction d'un côté d'exposition à la lumière du soleil et des conditions d'exposition à la lumière du soleil du véhicule de loisirs acquises par les capteurs photosensibles ;
**caractérisé en ce que**
la couverture de sortie d'air de l'unité de climatisation d'air du véhicule de loisirs est divisée en une pluralité de zones de sortie d'air, et un capteur photosensible est situé dans chaque zone de sortie d'air ; et
le module de commande commande l'unité de climatisation d'air pour le véhicule de loisirs pour réfrigérer une zone de sortie d'air lorsqu'une valeur de résistance d'un capteur photosensible situé dans cette zone de sortie d'air est la plus petite, ce qui indique que le côté d'exposition à la lumière du soleil du véhicule de loisirs est sur la zone dans laquelle ce capteur photosensible est situé.

7. Unité de climatisation d'air pour un véhicule de loisirs selon la revendication 6, dans laquelle le module de commande est connecté aux capteurs photosensibles (R1, R2, R3) et au module de détection.

8. Unité de climatisation d'air pour un véhicule de loisirs selon la revendication 6 ou 7, dans laquelle les capteurs photosensibles (R1, R2, R3) comprennent un premier capteur photosensible (R1), un deuxième capteur photosensible (R2) et un troisième capteur photosensible (R3).

9. Unité de climatisation d'air pour un véhicule de loisirs selon la revendication 6, 7 ou 8, dans laquelle la pluralité de zones de sortie d'air comprend une première zone de sortie d'air, une deuxième zone de sortie d'air et une troisième zone de sortie d'air.

10. Unité de climatisation d'air pour un véhicule de loisirs selon la revendication 9, lorsqu'elle dépend de la revendication 8, dans laquelle le premier capteur photosensible (R1) est situé dans la première zone de sortie d'air, le deuxième capteur photosensible (R2) est situé dans la deuxième zone de sortie d'air et le troisième capteur photosensible (R3) est situé dans la troisième zone de sortie d'air, et dans laquelle
le module de commande commande l'unité de climatisation d'air pour le véhicule de loisirs pour réfrigérer la première zone de sortie d'air lorsque la valeur de résistance du premier capteur photosensible est la plus petite, ce qui indique que le côté d'exposition au soleil du véhicule de loisirs est sur le premier capteur photosensible ;
le module de commande commande l'unité de climatisation d'air pour le véhicule de loisirs pour réfrigérer la deuxième zone de sortie d'air lorsque la valeur de résistance du deuxième capteur photosensible est la plus petite, ce qui indique que le côté d'exposition à la lumière du soleil du véhicule de loisirs est sur le deuxième capteur photosensible ; et
le module de commande commande l'unité de climatisation d'air pour le véhicule de loisirs pour réfrigérer la troisième zone de sortie d'air lorsque la valeur de résistance du troisième capteur photosensible est la plus petite, ce qui indique que le côté d'exposition à la lumière du soleil du véhicule de loisirs est sur le troisième capteur photosensible.
